(19) Europäisches Patentamt
European Patent Office
Office européen des brevets

(11) **EP 2 035 861 B1**

(12) **FASCICULE DE BREVET EUROPEEN**

(45) Date de publication et mention
de la délivrance du brevet:
**21.08.2013 Bulletin 2013/34**

(51) Int Cl.:
***G01T 1/24*** *(2006.01)*   ***G01T 1/29*** *(2006.01)*

(21) Numéro de dépôt: **07788870.9**

(86) Numéro de dépôt international:
**PCT/FR2007/000965**

(22) Date de dépôt: **11.06.2007**

(87) Numéro de publication internationale:
**WO 2007/147957 (27.12.2007 Gazette 2007/52)**

(54) **DISPOSITIF DE LOCALISATION ET D'IMAGERIE DE SOURCES DE RAYONNEMENT GAMMA OU X.**

EINRICHTUNG ZUM LOKALISIEREN UND ABBILDEN VON GAMMA- ODER RÖNTGENSTRAHLUNGSQUELLEN

DEVICE FOR LOCATING AND IMAGING GAMMA OR X-RADIATION SOURCES.

(84) Etats contractants désignés:
**DE FR GB**

(30) Priorité: **20.06.2006 FR 0605460**

(43) Date de publication de la demande:
**18.03.2009 Bulletin 2009/12**

(73) Titulaire: **Commissariat à l'Énergie Atomique et aux Énergies Alternatives
75015 Paris (FR)**

(72) Inventeurs:
 • **LAURENT, Philippe
 91440 Bures Sur Yvette (FR)**
 • **LIMOUSIN, Olivier
 91140 Villebon Sur Yvette (FR)**

(74) Mandataire: **Priori, Enrico et al
Cabinet Orès
36, rue de St. Pétersbourg
75008 Paris (FR)**

(56) Documents cités:
**US-A1- 2004 084 624**

• **SEGRETO,A: "Performance of the IBIS Compton Mode" PROC SPIE INT SOC OPT ENG; PROCEEDINGS OF SPIE - THE INTERNATIONAL SOCIETY FOR OPTICAL ENGINEERING; UV AND GAMMA-RAY SPACE TELESCOPE SYSTEMS 2004, vol. 5488, no. PART 2, 2004, pages 738-749, XP002455888 Bellingham, WA cité dans la demande**
• **SMITH L E ET AL: "Hybrid collimation for industrial gamma-ray imaging: combining spatially coded and compton aperture data" NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL, vol. 462, no. 3, 21 avril 2001 (2001-04-21), pages 576-587, XP004239346 ISSN: 0168-9002**
• **FOROT ET AL: "Compton telescope with coded aperture mask: Application to the INTEGRAL/IBIS Compton mode" NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL, vol. 567, no. 1, 1 novembre 2006 (2006-11-01), pages 158-161, XP005720415 ISSN: 0168-9002**

## Description

La présente invention concerne un dispositif de localisation et d'imagerie bi- ou tridimensionnelle de sources de rayonnement X et/ou gamma.

L'invention s'applique notamment aux domaines suivants :

- médecine nucléaire,
- surveillance des centrales nucléaires,
- surveillance des ports, des gares, des aéroports,
- plus généralement, lutte contre la contrebande de matériaux radioactifs ; et
- radiographie et contrôle non destructif.

On pourra se reporter aux documents suivants :

[1] Mise en oeuvre et étude des propriétés spectrales de la gamma-caméra ISGRI, thèse présentée et soutenue par Olivier Limousin le 27 novembre 2001
[2] The basic component of the ISGRI CdTe gamma-ray camera for space telescope IBIS on board the INTEGRAL satellite, O. Limousin et al., Nuclear Instruments and Methods in Physics Research A 428 (1999) 216-222
[3] Polycell: the elementary detection unit of the ISGRI CdTe & gamma-ray camera, O. Limousin et al., Nuclear Instruments and Methods in Physics Research A 458 1-2 (2001) 551-557
[4] A basic component for ISGRI, the CdTe gamma camera on board the Integral satellite, M. Arques et al., IEEE Transactions on nuclear science, Vol. 46, N° 3, 1999, 181-186
[5] The ISGRI CdTe gamma-ray camera: first steps, O. Limousin et al., Nuclear Instruments and Methods in Physics Research A 442 (2000) 244-249
[6] Qualification model of the space ISGRI CdTe gamma-ray camera, O. Limousin et al., Nuclear Instruments and Methods in Physics Research A 471 (2000) 174-178.

Pour l'imagerie ou la spectro-imagerie dans le domaine des rayons gamma ou X d'environ 20 keV à 2 MeV, les systèmes de détection connus utilisent généralement l'une des trois techniques suivantes : imagerie à masque codé, imagerie « Compton » et focalisation gamma ou X.

L'imagerie à masque codé consiste à enregistrer, sur un détecteur de position qui est sensible aux photons gamma ou X, l'ombre d'un masque qui est partiellement opaque à ces photons et dont le motif est connu, ce masque étant éclairé par la source de rayonnement gamma ou X que l'on cherche à détecter et à localiser. Le détecteur de position échantillonne l'ombre portée. La position de la source est reconstruite par calcul.

Il n'est pas nécessaire d'enregistrer l'énergie déposée par les photons gamma ou X pour constituer l'image, et cette technique ne donne pas d'information sur l'énergie. En revanche, elle peut être appliquée sur de grands domaines spectraux. Toutefois, elle est généralement limitée aux basses énergies, inférieures à 1 MeV.

Ses principaux intérêts résident dans sa bonne résolution angulaire, et dans la soustraction automatique du bruit de fond, améliorant la sensibilité (rapport signal (source) sur bruit (environnement)). La résolution angulaire peut être typiquement de l'ordre de quelques minutes d'arc. Elle est fixe et dépend de la taille des éléments du masque, de la capacité du détecteur de position à échantillonner ces éléments, et de la distance du masque au plan de détection.

Les systèmes d'imagerie à masque codé ont une hauteur de quelques centimètres à quelques mètres. Leur champ de vue est limité à quelques degrés, voire quelques dizaines de degrés.

La technique de l'imagerie « Compton » utilise au moins deux détecteurs de rayonnements gamma ou X qui sont capables d'enregistrer les positions des interactions d'un photon gamma ou X incident avec ces détecteurs et les énergies déposées par ce photon en ces positions.

Le principe de cette technique repose sur le fait qu'un photon gamma ou X, ayant une énergie incidente suffisamment élevée, présente une forte probabilité de ne céder qu'une partie de cette énergie à un électron qui est lié aux atomes du premier détecteur rencontré, à la suite d'un choc inélastique, puis de diffuser vers le second détecteur où il cède tout ou partie de son énergie résiduelle.

L'angle de diffusion est lié à l'énergie du photon incident et à l'intensité du dépôt d'énergie lors de l'interaction avec le premier détecteur.

Un système dit « Compton » est un spectro-imageur. Dans un tel système, la direction du photon incident et donc la position de la source émettrice sont reconstruites par le calcul. La résolution angulaire du système et la précision de localisation dépendent de la précision de mesure de l'énergie et de la statistique de comptage (temps de pose et flux de la source).

Dans un système « Compton » idéal, dont la mesure spectrale est « parfaite », la résolution angulaire est systématiquement limitée par l'effet « d'élargissement Doppler » : l'angle de diffusion est affecté d'une incertitude liée au fait que l'électron sur lequel diffuse le photon n'est pas au repos au moment du choc. La résolution angulaire est limitée à environ 2 à 3°.

En outre, les systèmes « Compton » ont un champ de vue très étendu, potentiellement $4\pi$ stéradians. La limitation de la sensibilité de ce type d'imageur vient du traitement des coïncidences fortuites qui ne sont pas dues à la diffusion Compton. De plus, ces systèmes sont compacts et peuvent avoir des dimensions réduites à quelques centimètres.

Le principe d'un imageur spectrométrique utilisant la focalisation gamma ou X est fondé sur l'utilisation d'une lentille gamma ou X qui est équipée de cristaux sur lesquels les photons gamma ou X sont diffusés (diffusion de Bragg).

La résolution angulaire d'un tel imageur est excellente - elle vaut environ 1 minute d'arc - mais l'imageur est limité par une distance focale gigantesque qui dépend fortement de l'énergie des photons incidents et vaut environ 15 m à 122 keV et environ 80 m à 511 keV.

En outre, l'imagerie est directe mais limitée à un domaine spectral étroit et le champ de vue de ce type de système est minuscule : il vaut quelques minutes d'arc. Les applications de la technique de focalisation gamma ou X sont donc plutôt liées à l'astronomie.

Les trois techniques que l'on vient de rappeler permettent une résolution en énergie et une localisation angulaire de sources qui sont situées à grande distance, quasiment à l'infini. Ainsi les systèmes de détection correspondants trouvent-t-ils leurs principales applications dans l'astronomie à haute énergie.

De plus, tous ces systèmes sont soit encombrants, soit limités quant à leur bande spectrale, soit peu performants quant à leur résolution angulaire à haute énergie. De plus, ils ne sont bien adaptés qu'à la localisation bidimensionnelle de sources de rayonnement gamma ou X que l'on considère comme « à l'infini », c'est-à-dire à une distance égale à au moins huit fois la hauteur du télescope incorporant un système de l'un des trois types considérés plus haut.

Le document GB 2 293 742 décrit une caméra gamma basée sur le principe de l'imagerie par masque codé et permettant de localiser en trois dimensions une source de rayonnement gamma située à une distance finie. La distance de la source par rapport à la caméra est déterminée par analyse du grossissement de l'ombre du masque codé projeté par ladite source sur le détecteur. La sensibilité d'une telle caméra s'avère insuffisante pour identifier une source gamma faible, dont le flux de rayonnement est du même ordre de grandeur du bruit de fond, voire même inférieur.

Le télescope gamma ISGRI est basé sur la technique à masque codé, mais comporte deux détecteurs plans parallèles : par conséquent, de moins en principe, il pourrait être utilisé en mode Compton. En réalité, dans son article « Performance of the IBIS Compton mode », SPIE 2004, 5488 page 738, A. Segreto a montré que les performances du télescope IBIS en mode Compton ne sont pas satisfaisantes en raison de sa faible immunité au bruit de fond.

La présente invention a pour but de remédier aux inconvénients précédents et propose un dispositif qui permet de localiser des sources de rayonnement gamma ou X en deux ou trois dimensions et d'en former une image, et cela même en présence d'un rapport signal sur bruit très faible.

Conformément à l'invention un tel but est atteint par un dispositif selon la revendication 1.

Les revendications 2 à 13 portent sur des modes de réalisation de l'invention.

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue schématique d'un mode de réalisation particulier du dispositif objet de l'invention,
- la figure 2 est une vue en perspective schématique du masque codé et d'un détecteur faisant partie du dispositif de la figure 1,
- la figure 3 illustre schématiquement le principe de l'imagerie Compton qui est utilisé dans le dispositif de la figure 1,
- la figure 4 est une vue schématique du masque codé et de l'un des détecteurs qui font partie du dispositif de la figure 1, et
- la figure 5 est un organigramme d'un procédé d'imagerie en oeuvre par le dispositif de l'invention.

Un dispositif conforme à l'invention combine la technique d'imagerie à masque codé et la technique d'imagerie « Compton ».

Ce dispositif utilise simultanément un système de détection « Compton », comportant au moins deux détecteurs de rayonnement, et un masque codé placé devant la surface sensible de l'un des détecteurs.

La réponse du dispositif objet de l'invention offre les avantages de la bonne résolution angulaire du masque codé sur toute la dynamique spectrale du système de détection « Compton » et conserve une résolution angulaire moyenne sur un champ de vue très étendu. De surcroit, l'utilisation combinée des techniques Compton et à masque codé permet d'améliorer sensiblement le rapport signal sur bruit.

La présente invention s'affranchit des limitations des dispositifs connus et permet de :

- localiser avec précision en deux ou trois dimensions une (ou des) source(s) ponctuelle(s) de rayonnement sur une gamme spectrale étendue (20 keV à 10 MeV pour des rayonnements gamma ou X),

- localiser une source ou simultanément des sources du champ de vue du masque codé en trois dimensions, c'est-à-dire déterminer la position de sources de rayonnement qui sont situées à des distances finies et sont éventuellement différentes (le dispositif fournit une image bidimensionnelle des sources et la distance à laquelle il se trouve des sources),

- localiser avec une résolution limitée à 2 ou 3° une (ou des) source(s) ponctuelle(s) ou étendue(s), sur une gamme spectrale étendue allant d'environ 50 keV à 10 MeV pour des rayonnements gamma ou X (par « source étendue », on entend une source dont les dimensions angulaires sont supérieures à environ 5 fois la résolution du masque codé),

- déterminer la distance entre le dispositif et une (ou plusieurs) source(s) ponctuelle(s) ou étendue(s), qui sont éventuellement situées à des distances différentes du dispositif,

- mesurer l'énergie de chaque photon incident individuellement,

- mesurer le spectre en énergie de la (ou des) source(s), ceci dans un vaste domaine allant de quelques keV à quelques MeV pour des rayonnements gamma ou X,

- déterminer la date d'arrivée de chaque photon,
  de déterminer le flux de la (ou des) source(s) ponctuelle(s) détectée(s),
  de déterminer précisément le flux de la (ou des) source ponctuelle(s) ou étendue(s) par le traitement approprié des coïncidences fortuites pour la reconstruction des photons détectés lors des diffusions Compton, et

- déterminer la variation de flux de la (ou des) source(s) détectée(s).

L'invention tire avantage de la compacité des systèmes « Compton » et des systèmes à masque codé.

Un dispositif conforme à l'invention comporte au moins deux détecteurs plans qui ont de préférence des résolutions spatiale et spectrale élevées, travaillent en coïncidence et sont associés à un masque codé qui permet d'affiner l'image d'une prise de vue « Compton » et, de manière optionnelle, de déterminer la position de la source et sa distance au dispositif.

On obtient ainsi une cartographie en deux ou trois dimensions des sources observées. On aboutit, en définitive, à la réalisation d'une caméra X et/ou gamma bi- ou tridimensionnelle.

Par ailleurs, pour fabriquer les détecteurs utilisés dans l'invention, on emploie de préférence une technologie qui permet leur utilisation à température ambiante, ce qui d'une part simplifie leur mise en oeuvre et d'autre part permet d'optimiser le poids et l'encombrement de la caméra pour qu'elle soit transportable.

L'association de ces détecteurs à des circuits électroniques fortement intégrés, de type ASIC (pour Application Specific Integrated Circuit) et de consommation modérée, permet de rendre la caméra portative et autonome.

De plus, cette caméra peut être rendue capable de travailler dans un milieu bruité, par exemple une centrale nucléaire, sans perte notable de sensibilité.

Ceci peut être fait de manière classique, grâce à l'adjonction de blindages (par exemple en plomb, en tungstène ou en d'autres métaux lourds), mais aussi par un traitement qui est spécifique aux mesures Compton et qui sera exposé ultérieurement. Les blindages ont pour effet de réduire l'angle d'observation de la caméra, alors que le traitement spécifique aux mesures Compton n'a pas cet inconvénient. L'invention peut utiliser l'une ou l'autre de ces protections contre le bruit ou l'association des deux.

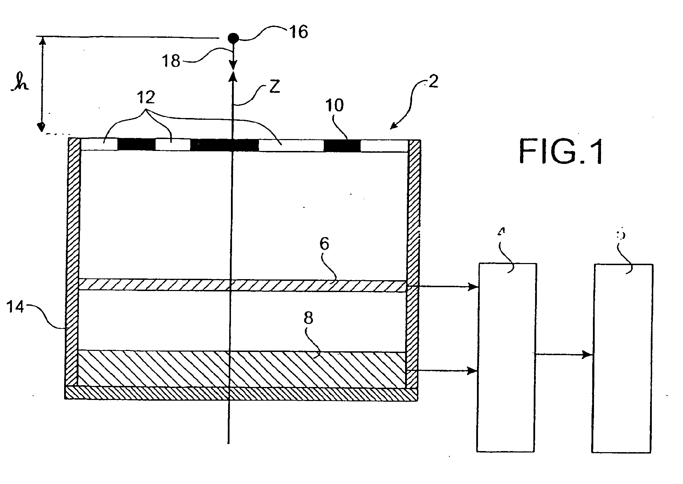

La figure 1 est une vue schématique d'un dispositif conforme à l'invention. Ce dispositif est destiné à la localisation tridimensionnelle de sources de rayonnement.

Ce dispositif comprend un ensemble de détection 2 et des moyens électroniques de traitement 4 qui sont munis de moyens 5 d'affichage des résultats qu'ils fournissent.

Le dispositif de l'invention se différencie du télescope IBIS essentiellement par les moyens électronique de traitement 4, qui permettent la mise en oeuvre d'un procédé d'imagerie innovant, combinant avantageusement les techniques « Compton » et « à masque codé ».

L'ensemble de détection 2 comprend un premier détecteur 6, apte à détecter un rayonnement, et un deuxième détecteur 8, également apte à détecter ce rayonnement. Les détecteurs sont sensibles à la position. Avantageusement, ils sont plans et parallèles entre eux, mais il ne s'agit pas d'une condition essentielle.

Chacun de ces détecteurs est apte à fournir une impulsion électrique lorsqu'il reçoit un photon du rayonnement, cette impulsion électrique étant représentative de l'énergie de ce photon et de la position d'impact de ce dernier sur le détecteur qui le reçoit.

L'ensemble de détection 2 comprend aussi un masque codé 10 qui est fait d'un matériau opaque au rayonnement. Ce masque codé 10 est percé de trous 12 selon un motif prédéfini ; il est placé en regard du premier détecteur 6 et ce dernier est compris entre le masque codé 10 et le deuxième détecteur 8.

Avantageusement, le masque codé 10 est pian et parallèle aux détecteurs 6 et 8, mais là encore il ne s'agit pas d'une condition essentielle.

Le dispositif comprend aussi un blindage 14 sur lequel on reviendra par la suite.

Au moyen du dispositif, on veut localiser une source 16 qui émet un rayonnement (X et/ou gamma) 18. Pour ce faire, on oriente le dispositif vers cette source. On reviendra sur cette orientation par la suite.

L'axe Z du dispositif est alors dirigé vers la zone où se trouve la source.

La source 16 engendre une ombre portée sur chacun des premier et deuxième détecteurs 6 et 8 par l'intermédiaire du masque codé 10. Les premier et deuxième détecteurs 6 et 8 engendrent alors respectivement des première et deuxième images sous forme électrique de cette ombre portée.

Les moyens électroniques de traitement 4 sont prévus pour traiter les impulsions électriques qui sont fournies par les premier et deuxième détecteurs, pour localiser la source 16.

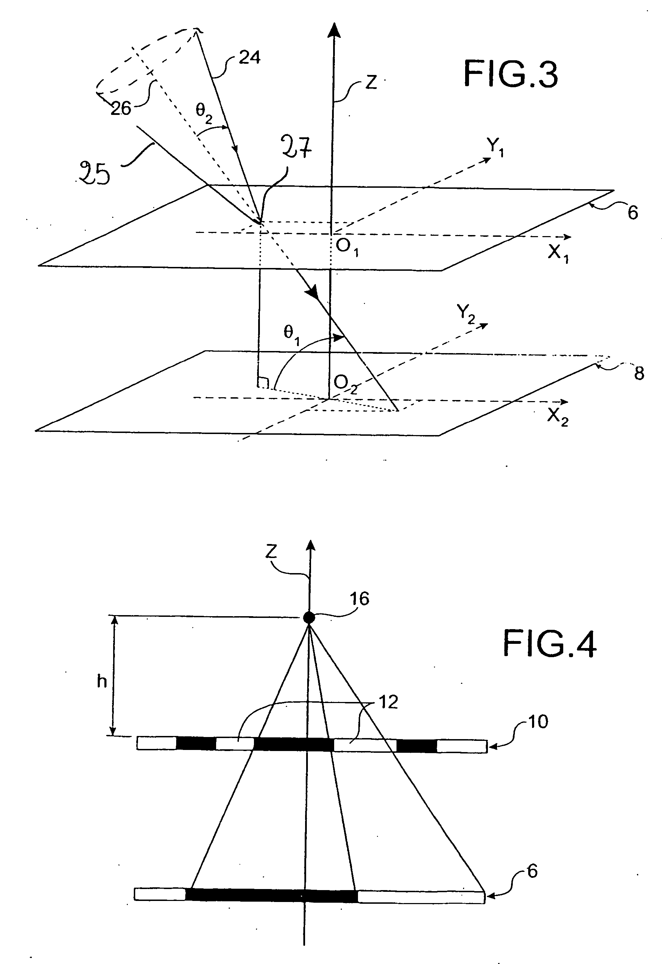

Conformément à l'invention, les moyens électroniques de traitement 4 sélectionnent les impulsions électriques qui sont respectivement fournies par les premier et deuxième détecteurs 6 et 8 et qui coïncident temporellement. Ces impulsions en coïncidence temporelle sont susceptibles de représenter un événement de diffusion Compton d'un photon sur l'un des détecteurs, suivi par son absorption par l'autre détecteur. Il est important d'observer que la diffusion Compton peut se faire vers l'avant, auquel cas le photon interagit d'abord avec le premier détecteur 6 et puis avec le deuxième détecteur 8 (c'est la situation représentée sur la figure 3, et la plus fréquente pour les photons d'énergie supérieure ou égale à 1 MeV), ou bien vers l'arrière, auquel cas le photon interagit d'abord avec le deuxième détecteur 8 et puis avec le premier détecteur 6. On supposera que l'on sait distinguer entre ces deux familles d'événements : on reviendra par la suite sur la technique de traitement de données qui permet d'effectuer cette distinction.

Dans un souci de simplicité, on négligera par la suite la possibilité qu'un photon subisse une double diffusion Compton au lieu d'être absorbée par l'un des détecteurs : ces événements ne font que contribuer au bruit de fond.

Après avoir sélectionnée les impulsions électriques en coïncidence temporelle, les moyens électroniques de traitement déterminent, par imagerie Compton, une estimation préliminaire de la position angulaire et de la distribution angulaire de la source 16 de rayonnement gamma ou X, en supposant qu'elle se trouve à une distance infinie de l'ensemble de détection 2.

L'imagerie Compton est une technique bien connue (voir par exemple la référence [1]). Son principe sera néanmoins exposé ci-après en référence à la figure 3.

Sur cette figure, les plans détecteurs ont encore les références 6 et 8. L'axe du dispositif a encore la référence Z. Cet axe Z est orthogonal aux plans détecteurs 6 et 8. On définit un repère $O_1 X_1 Y_1 Z$ où le point $O_1$ appartient au plan détecteur 6 et les axes $X_1$ et $Y_1$ sont situés dans ce plan détecteur 6 et sont perpendiculaires l'un à l'autre et à l'axe Z.

On définit aussi un repère $O_2 X_2 Y_2 Z$ où le point $O_2$ appartient aux plan détecteur 8 et les axes $X_2$ et $Y_2$ sont situés dans ce plan détecteur 8 et sont perpendiculaires l'un à l'autre et à l'axe Z.

La localisation d'une source est déterminée par l'étude des évènements en coïncidence entre les deux détecteurs plans 6 et 8. Cette étude est basée sur l'effet Compton selon lequel un photon du rayonnement dépose de l'énergie dans le premier détecteur 6, est dévié, puis dépose le reste de son énergie dans le deuxième détecteur 8.

Dans un premier temps, on déduit l'angle $\theta_2$ entre la direction 24 du photon incident et la direction 26 du photon diffusé entre les deux détecteurs plans, grâce à la mesure précise du dépôt d'énergie dans chacun des deux détecteurs plans. Au sujet du calcul de l'angle $\theta_2$, on se reportera au document suivant :

[9] Gamma-ray burst détection and localization capabilities of the IBIS/INTEGRAL telescope Compton mode, Marcinkowski R. et al., Il Nuovo Cimento 28 (2005) 845.

Puis on mesure l'angle $\theta_1$ entre les plans des détecteurs du dispositif et la direction 26 du photon diffusé, grâce à la connaissance précise des points respectifs d'impact dans les deux détecteurs plans. Dans chaque détecteur, le point d'impact correspond à un pixel de ce détecteur. L'angle $\theta_1$ est donné par la formule suivante :

$$\theta_1 = \arctan\left(\left[\left((x_2-x_1)^2 + (y_2-y_1)^2\right)^{1/2}\right]/d\right)\ .$$

où $x_1$ et $y_1$ sont les coordonnées du point d'impact dans le détecteur 6 et $x_2$ et $y_2$ sont les coordonnées du point d'impact dans le détecteur 8.

La direction 24 de la source 16 de photons par rapport à l'axe Z du dispositif, qui permet de reconstruire l'image bidimensionnelle, et la distance entre le dispositif et la source s'obtiennent par l'étude statistique des angles $\theta_1$ et $\theta_2$ pour chaque photon sélectionné.

La direction d'un photon incident étant sur le cône 25 d'axe 26 et de demi-angle au sommet $\theta_2$ (« cône de diffusion Compton »), on détermine la direction 24 de la source en calculant l'intersection de tous les cônes 25 associés à chaque photon sélectionné.

Le fait de supposer que la source 16 est située à une distance infinie simplifie considérablement le traitement des données. En effet, dans ce cas on peut négliger le décalage entre les sommets 27 des cônes 25, et le problème se réduit à la détermination de l'intersection d'une pluralité de cônes, dont les sommets coïncident, sur la surface d'une sphère représentant la sphère céleste. Cela équivaut à déterminer les intersections des cônes de diffusion Compton sur une sphère de rayon infini.

Cette étape d'imagerie Compton permet de déterminer une image préliminaire en deux dimensions de la source 16, c'est à dire une estimation de sa position et distribution angulaire. Cette image présente une résolution angulaire relativement faible (2° - 3°) en raison des limitations intrinsèques de la technique Compton, mais elle permet néanmoins d'identifier une ou plusieurs sources gamma ou X dans le champ de vue de la caméra.

Ensuite les moyens électroniques de traitement 4 sélectionnent, parmi les impulsions électriques en coïncidence temporelle, celles qui, au vu de cette image « Compton » à basse résolution, sont susceptibles de représenter des photons provenant de ladite source (16).

A ce point, les moyens électroniques de traitement 4 effectuent la déconvolution par rapport au motif du masque 10 de la première image ou de la deuxième image ou des deux. Autrement dit, ils effectuent la reconstruction d'une image de la source 16 par la technique du masque codé. Mais cette reconstruction est effectuée en prenant en considération uniquement les impulsions sélectionnées, qui correspondent aux photons susceptibles de représenter des photons provenant de ladite source (16).

Cette synergie parmi la technique d'imagerie Compton, qui permet une première identification de la source 16 et une sélection des photons « utiles », et la technique d'imagerie par masque codé qui permet d'atteindre une bonne résolution angulaire permet d'améliorer sensiblement le rapport signal sur bruit de l'image obtenue.

Par ailleurs, on tire également avantage du fait que le champ de vue Compton est beaucoup plus grand de celui associé à la technique du masque codé. Ainsi, si la source 16 identifiée par imagerie Compton se trouve en dehors du champ de vue de la caméra (définie par rapport à la modalité à masque codé), on pourra se servir de cette information pour repointer ladite caméra en direction de la source.

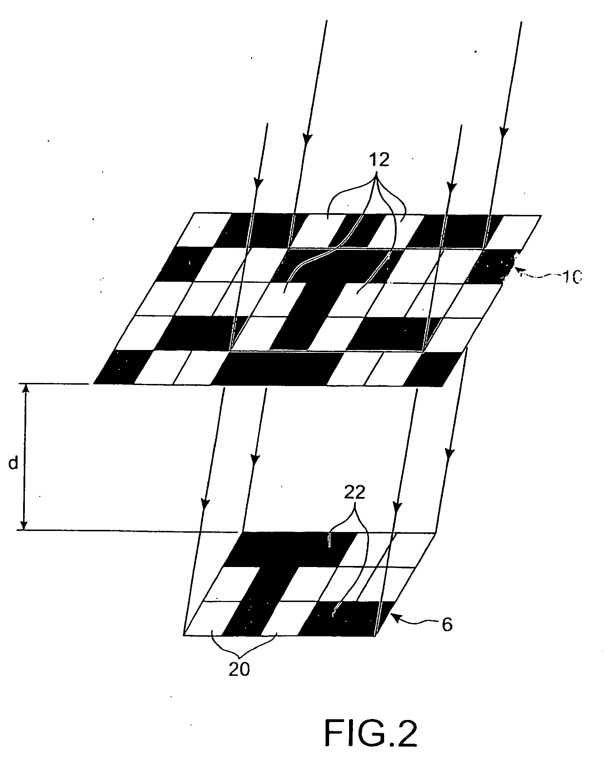

La technique d'imagerie par masque codé est bien connue en soi. Néanmoins, elle sera synthétiquement décrite ci-après en référence à la figure 2. Dans un souci de simplicité, on considère dans un premier temps le cas d'une source ponctuelle située à une distance infinie de l'ensemble de détection 2.

On appelle « source ponctuelle », une source dont la dimension est inférieure à la résolution de l'appareillage de détection constitué par le détecteur 6 et le masque 10. La résolution est un paramètre qui dépend de la taille des trous 12 du masque, de la taille des pixels du détecteur 6 et de la distance $\underline{d}$ du détecteur 6 au masque 10.

Le masque codé est constitué d'une plaque d'un matériau qui est opaque au rayonnement (par exemple le plomb, le tantale ou le tungstène) et qui est percé des trous 12 selon un motif prédéfini. Lorsqu'il est exposé à une source de rayonnement, une partie de ce rayonnement est arrêtée par le matériau opaque du masque alors qu'une autre partie traverse les trous et crée sur le plan détecteur un motif composé de zones claires 20 et de zones obscures 22. Ce motif est directement lié à la direction de la source.

A partir du codage connu du masque et du motif reçu sur le plan détecteur, on peut déterminer précisément la direction d'une source ponctuelle dans le champ de vue par un traitement informatique approprié.

Ce traitement consiste essentiellement en une déconvolution en deux dimensions de la première image ou de la deuxième image ou des première et deuxième images par rapport au motif du masque codé 10. Concrètement, cette déconvolution consiste à rechercher tout ou part du motif du masque 10 sur lesdites images. Compte tenu du motif choisi pour le masque, à une position de la source 16 ne correspond qu'un seul motif possible d'ombre portée 22. La meilleure corrélation entre tout ou partie du motif du masque 10 et l'ombre portée 22 enregistrée dans les détecteurs 6 et 8 donne la direction de la source 16.

Pour plus d'informations sur cette technique on se reportera aux documents suivants :

[7] the INTEGRAL IBIS/ISGRI. System point spread function and source location accuracy, A. Gros et al., Astronomy and Astrophysics 411 (2003) L179

[8] INTEGRAL/IBIS scientific data analysis, A. Goldwurm et al., Astronomy and Astrophysics 411 (2003) L223,

ainsi qu'au document [1] cité plus haut.

On précise que le quadrillage présent sur le masque 10 de la figure 2 correspond au motif du masque codé 10 (les éléments opaques au rayonnement sont représentés en noir et les éléments 12 transparents au rayonnement en blanc) et que le quadrillage présent sur le détecteur 6 de cette figure 2 correspond à l'ombre portée 22 par la source 16 de rayonnement de ce masque codé sur le détecteur 6.

On considère maintenant le cas d'une source 16 toujours ponctuelle, mais située à une distance finie h de l'ensemble de détection 2 (plus précisément, du masque 10). La figure 4 représente une telle situation. Sur cette figure, la source 16 est représentée sur l'axe Z de la caméra, mais la technique s'applique également à une source hors axe.

Comme on peut le voir sur la figure 4, lorsque la source 16 se trouve à une distance finie du masque 10, l'ombre du masque sur le détecteur 6 (et sur le détecteur 8) est grossie. On peut déduire la distance h d'une analyse du grossissement de l'image du motif du masque 10 sur le détecteur 6 et/ou sur le détecteur 8.

L'exploitation des grossissements différents des motifs de masque, motifs qui sont enregistrés sur les deux détecteurs plans et parallèles les uns aux autres, permet d'améliorer la précision de mesure de la distance de la source, étant donné qu'il s'agit de mesures indépendantes et multiples du même paramètre. Une première possibilité consiste à évaluer la distance h en mesurant le grandissement du motif du masque 10 séparément sur les deux détecteurs ; les deux évaluations sont alors moyennées afin d'améliorer la précision. Une autre possibilité consiste à utiliser uniquement la différence de grossissement des images formées sur les deux surfaces détectrices pour évaluer la distance de la source par triangulation, la distance d entre ces deux surfaces détectrices étant connue.

Concrètement, on détermine en même temps la direction et la distance de la source 16 en effectuant la déconvolution en deux dimensions de la première image ou de la deuxième image ou des première et deuxième images par rapport à une pluralité de répliques agrandies du masque codé 10, présentant différents coefficients de grandissement. Le grandissement qui permet de reconstruire l'image la plus nette est sélectionnée, et on en déduit la distance h de la source 16.

Les opérations de convolution et déconvolution étant linéaires, le procédé d'imagerie par masque codé s'applique également au cas d'une ou plusieurs sources, même étendues. Seulement, plus on s'éloigne du cas d'une source ponctuelle isolée, plus important est le bruit qui affecte l'image reconstituée. D'où l'importance de réduire ce bruit en sélectionnant les photons « utiles » par la technique Compton.

Malgré cela, la détermination de la position de la source 16 par imagerie à masque codée est inévitablement affectée par une indétermination, qui peut être quantifiée. Cette indétermination peut être réduite en ayant recours une nouvelle fois à l'imagerie Compton.

En effet, si on ne fait pas l'hypothèse d'une source située à distance infinie, l'imagerie Compton permet - de moins en principe - de localiser une source de rayonnement en trois dimensions, en déterminant le point d'intersection des différents cônes 25 constitués par toutes les possibles directions d'arrivée 24 des différents photons. Cette fois l'intersection est déterminée sans ramener les sommets 27 des cônes 25 en un point commun, car on ne fait plus l'hypothèse que la source 16 soit à l'infini. Bien entendu, à cause des erreurs de mesure, tous les cônes 25 ne se croisent pas en un seul point, et la localisation de la source est affectée par une incertitude importante.

En soi, l'imagerie Compton en trois dimensions présente une précision peu satisfaisante. Mais dans le cas de l'invention on peut tirer avantage de la connaissance approximative de la distance de la source qui a été fournie par la déconvolution du motif du masque 10. Pour ce faire, on procède de la manière suivante :

- L'étape précédente d'imagerie par masque codé a fourni une première estimation de la distance h de la source 16 par rapport à l'ensemble de détection 2, ainsi que de l'incertitude de cette première estimation. On peut en déduire une limite inférieure $h_{min}$ et une limite supérieure $h_{max}$ pour ladite distance.
- On détermine ensuite une pluralité de valeurs d'essai $h_{essai}$ de distance de la source 16, ces valeurs d'essai étant comprises entre $h_{min}$ et $h_{max}$.
- Pour chaque valeur d'essai $h_{essai}$ on détermine par imagerie Compton une estimation d'essai de la position angulaire et de la distribution angulaire de la source 16. Cette estimation d'essai est obtenue en déterminant le point d'intersection des projections des cônes de diffusion Compton sur une sphère de rayon $h_{essai}$ et de centre coïncident avec le centre de l'ensemble de détection 2.

- Chaque estimation d'essai est affectée d'une incertitude due au fait qu'en réalité toutes les projections des cônes ne se croisent pas en un même point. Cette incertitude peut être déterminée.
- A ce point, on choisi en tant que deuxième estimation de la distance h la valeur d'essai $h_{essai}$ qui a fourni l'estimation d'essai avec la plus faible incertitude. A son tour, cette estimation d'essai est choisie en tant que deuxième estimation de la position angulaire et de la distribution angulaire de la source 16.

La deuxième estimation de la distance h, fournie par l'imagerie Compton en trois dimensions, peut avoir ou non une meilleure précision que celle du masque codé. On retient la meilleure valeur comme pour la position.

En revanche, la précision de la seconde estimation la position angulaire et de la distribution angulaire de la source 16 peut être meilleure ou moins bonne que celle de la première estimation, fournie par déconvolution du motif du masque 10. L'incertitude affectant ces deux estimations peut être calculée par des techniques connues par elles-mêmes : on peut donc retenir l'estimation pour laquelle ladite incertitude est la plus faible.

Il est également possible d'affiner ultérieurement l'estimation de la position, de la distance et de la distribution angulaire de la source 16 en ayant recours à un procédé itératif. En effet, le traitement décrit ci-dessus peut être répété en prenant en tant qu'estimation préliminaire, utilisée pour la sélection des événements « utiles », la meilleure estimation obtenue lors de l'itération précédente.

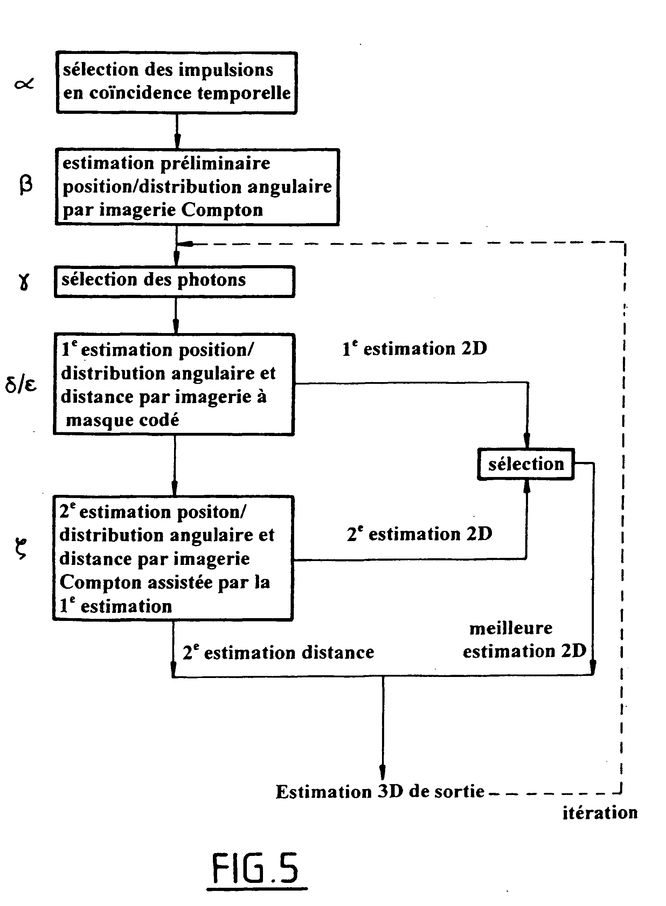

L'organigramme de la figure 5 présente une vue d'ensemble synthétique du procédé de traitement des données mis en oeuvre par les moyens électroniques de traitement 4.

L'étape α comporte la sélection des impulsions électriques fournies par les premier et deuxième détecteurs qui sont en coïncidence temporelle. Ces impulsions sont susceptibles de représenter un événement de diffusion Compton d'un photon du rayonnement gamma ou X sur l'un des détecteurs suivie par absorption par l'autre détecteur

L'étape β comporte la détermination par imagerie Compton d'une estimation préliminaire de la position angulaire et de la distribution angulaire de la source 16 de rayonnement gamma ou X, en supposant qu'elle se trouve à une distance infinie de l'ensemble de détection 2. Autrement dit, cette étape comporte la reconstruction d'une image bidimensionnelle (2D) par analyse des événements de diffusion Compton. Optionnellement, cette image bidimensionnelle préliminaire peut être utilisée pour modifier l'orientation de l'ensemble de détection 2, si la source identifiée se trouve à l'extérieur du champ de vue dudit ensemble de détection lorsque ce dernier est utilisé en mode à masque codé.

L'étape γ comporte la sélection des seules impulsions électriques qui, en plus d'être en coïncidence temporelle, sont susceptibles de provenir de la source 16, telle qu'identifiée à l'étape précédente.

L'étape δ/ε comporte la détermination d'une première image tridimensionnelle (3D) de la source 16, c'est à dire d'une première estimation de sa position angulaire, de sa distribution angulaire et de sa distance. Cette étape se décompose en une déconvolution bidimensionnelle de la première image ou de la deuxième image ou des première et deuxième images par rapport au motif du masque codé 10, sur les impulsions électriques sélectionnées, et en une estimation de la distance h par analyse du grandissement du motif dudit masque 10.

L'étape ζ comporte la détermination d'une seconde image tridimensionnelle de la source 16, c'est à dire d'une seconde estimation de sa position angulaire, de sa distribution angulaire et de sa distance. Cette étape est effectuée par imagerie Compton assistée par la connaissance de la première estimation de distance obtenue à l'étape δ/ε.

Ensuite on compare les niveaux d'incertitude de la première et de la seconde estimation de la position angulaire et de la distribution angulaire de la source 16. L'estimation présentant la moindre incertitude est combinée à la seconde estimation de distance pour fournir une image tridimensionnelle de sortie de la source de rayonnement 16.

Optionnellement, cette image tridimensionnelle de sortie peut être utilisée en tant qu'image préliminaire dans une nouvelle itération du procédé à partir de l'étape γ.

Il est également possible de ne pas effectuer les étapes β et γ, mais cette simplification est susceptible de dégrader sensiblement la qualité de l'image de la source 16.

Les moyens électroniques de traitement 4 sont en outre prévus pour déterminer le spectre énergétique de la source 16 à partir des impulsions électriques sélectionnées. Le dispositif constitue donc un spectro-imageur.

Pour ce faire, on procède de la façon suivante : on classe les impulsions sélectionnées par intervalle d'énergie, et l'on représente le résultat sous forme d'histogramme. Puis on compare le résultat de ce classement à celui des sources radiatives connues afin d'identifier leur présence. La présence et la mesure d'un ou plusieurs pics dans cette distribution permet l'identification d'une source radioactive donnée 16.

On considère ci-après la suppression des événements fortuits.

Certains évènements détectés par la caméra peuvent être fortuitement en coïncidence entre les deux détecteurs 6 et 8. Du fait de leur caractère fortuit, ils n'ont rien à voir avec la source à étudier et diminuent la sensibilité de la caméra lors de la production de l'image « Compton ». Cet effet peut être minimisé par un traitement informatique spécifique qui met en valeur les spécificités de la mesure Compton.

Ce traitement est par exemple le suivant :

Premièrement, on calcule la proportion R de coïncidences fortuites, qui est donnée par la formule suivante :

$$R = \frac{(2\Delta T - \delta T)R_1 R_2}{1 + (2\Delta T - \delta T)R_1 R_2}$$

où :

- $R_1$ et $R_2$ sont les taux de comptage du premier et du deuxième détecteur respectivement ;
- $2\Delta T$ est la largeur de la fenêtre temporelle à l'intérieur de laquelle on considère que deux impulsions sont en coïncidence temporelle ; et
- $\delta T$ est la résolution temporelle de l'électronique d'acquisition des données.

Ensuite on génère par calcul une liste de pseudo-évènements fortuits en associant aléatoirement deux à deux tous les évènements enregistrés par les deux détecteurs. Ces pseudo-évènements subissent le même traitement numérique que les évènements sélectionnés (étapes γ à ζ sur la figure 5). On obtient ainsi une pseudo-estimation de la position angulaire et de la distribution angulaire de la source (16) de rayonnement gamma ou X. Cette pseudo-estimation est ensuite pondérée avec la proportion calculée de coïncidences temporelles fortuites.

Enfin, on soustrait cette pseudo-estimation pondérée à l'image de la source obtenue par traitement numérique. On obtient ainsi une image de la source « nettoyée » du bruit dû aux coïncidences fortuites.

De plus, la mise en oeuvre de cette méthode permet l'estimation précise du flux de rayonnement de la source 16, même lorsque cette source est faible et immergée dans un environnement bruité.

Une autre cause de bruit et artefacts dans la reconstitution d'images Compton est due à l'indétermination de l'ordre dans lequel chaque photon interagit avec le premier et le deuxième détecteur. La figure 3, par exemple, représente un événement au cours duquel un photon interagit d'abord avec le premier détecteur 6, est diffusé vers l'avant (c'est à dire avec un angle de diffusion $\theta_2$<90°) puis est absorbé par le deuxième détecteur 8. Cependant, ce photon aurait également pu traverser le premier détecteur sans interagir, être diffusé vers l'arrière ($\theta_2$>90°) par le deuxième détecteur et être absorbé lors de son deuxième passage par le premier détecteur.

Les équations de la diffusion Compton fournissent des valeurs différentes de l'angle de diffusion $\theta_2$ selon que l'on fasse l'hypothèse que la diffusion a eu lieu vers l'avant ou vers l'arrière. Précisément, en cas de diffusion vers l'avant on a :

$$cos(\theta_2) = 1 - m_e c^2 \left( \frac{1}{E_2} - \frac{1}{E_1 + E_2} \right) \text{ avec } \theta_2<90°$$

et en cas de diffusion vers l'arrière on a

$$cos(\theta_2) = 1 - m_e c^2 \left( \frac{1}{E_1} - \frac{1}{E_1 + E_2} \right) \text{ avec } \theta_2>90°,$$

où $E_1$ et $E_2$ sont respectivement l'énergie déposée par le photon sur le premier détecteur 6 et sur le deuxième détecteur 8, $m_e$ est la masse au repos de l'électron et c la vitesse de la lumière.

Normalement, l'ambiguïté est enlevée en supposant que tous les événements correspondent à des diffusions vers l'avant, car il s'agit du cas le plus fréquent, en particulier pour les photons d'énergie supérieure ou égale à 1 MeV. Mais dans ces conditions, les photons diffusés vers l'arrière sont à l'origine de bruit et artefacts.

Un mode de réalisation avantageux de l'invention permet de faire mieux. Selon ce mode de réalisation, on calcule la section efficace pour la diffusion Compton vers l'avant et pour la diffusion Compton vers l'arrière pour chaque couple d'impulsions électriques en coïncidence temporelle. Puis on sélectionne le type d'événement auquel est associée la section efficace la plus élevée.

En variante, on applique une technique de décision souple : on utilise pour la reconstruction d'image les angles de diffusion Compton vers l'avant et vers l'arrière déterminés, et on affecte à chacune de ces deux possibilités un coefficient de pondération d'autant plus grand que la valeur correspondante de la section efficace est grande. Le cas limite, dans lequel un coefficient vaut 1 et l'autre 0, correspond au cas de la décision « dure » qui a été considérée plus haut.

Le calcul des angles et des sections afficaces s'applique au cas général d'une source située du côté du masque.

D'une manière connue en soi, la section efficace différentielle pour la diffusion Compton est donnée par la formule de Klein et Nishina, avec $E_i$ = E incident c'est-à-dire l'énergie totale E1 + E2 et $E_d$ = E diffusé:

$$\frac{d\sigma}{d\theta_2} = \pi Z r_e^2 \sin(\theta_2) \left( \frac{E_d}{E_i} \right)^2 \left( \frac{E_d}{E_i} + \frac{E_i}{E_d} - \sin^2(\theta_2) \right)$$

où Z est le nombre atomique du matériau constituant le détecteur sur lequel la diffusion a lieu et $r_e$ est le rayon classique de l'électron ($2,82.10^{-15}$ m).

$E_d$ est égal à $E_2$ pour une diffusion vers l'avant ("forward") et à $E_1$ pour une diffusion vers l'arrière ("backward"). On peut calculer la section efficace dans les deux cas.

Cette technique peut également être appliquée pour améliorer les méthodes d'imagerie Compton connues de l'art antérieur.

On précise ci-après la technologie des deux détecteurs plans.

A partir du principe de localisation que l'on a vu précédemment, on comprend que la résolution spatiale et la résolution spectrale (précision de mesure de la position d'interaction et précision de mesure de l'énergie des photons) sont des paramètres qui déterminent les performances du dispositif au premier ordre.

Du fait de l'utilisation de données Compton, la résolution des mesures fournies par ce dispositif dépend beaucoup de la résolution en énergie des détecteurs. On utilise donc de préférence des détecteurs semi-conducteurs pixellisés, dont les résolutions spectrale et spatiale sont élevées. Ces détecteurs peuvent être en CdTe, en silicium ou en germanium. On peut par exemple utiliser un détecteur en Si et un détecteur en CdTe ou deux détecteurs en CdTe.

A titre d'exemple, on a développé des détecteurs en CdTe, qui ont une haute résolution en énergie et peuvent être utilisés dans le dispositif de l'invention. Leurs performances spectrales sont suffisantes pour trouver des sources à 1 mètre avec une précision de 1 cm, et ceci dans une bande spectrale qui s'étend d'environ 200 keV à environ 2 MeV pour les rayonnements gamma ou X. Au sujet de ces détecteurs, on peut se reporter aux documents suivants :

Documents [1] à [6]
[10] 3D modeling of Cd(Zn)Te detectors for the SIMBOL-X space mission, B.P.F. Dirks et al., High Energy Detectors in Astronomy, Proceedings of SPIE vol. 5501, Glasgow (juin 2004)
[11] Leakage current measurements on pixelated CdZnTe detectors, B.P.F. Dirks et al., Nuclear Instruments and Methods in Physics Research A (2006).

A titre d'exemple, on peut utiliser des détecteurs dont les pixels forment des carrés de 0,5 mm à 10 mm de côté.

On précise ci-après quelques éléments quantitatifs au sujet de la caméra gamma ou X de l'invention.

- La distance séparant les deux détecteurs plans est un paramètre qui intervient dans la sensibilité de la détection. On peut montrer que la sensibilité est optimale lorsque la distance séparant les deux détecteurs plans est du même ordre de grandeur que la diagonal de ces détecteurs plans.
- La précision de séparation $\underline{s}$ du masque codé pour deux sources situées dans un plan perpendiculaire à l'axe Z de la caméra est telle que :

$s=\arctan(m/d)$ qui est peu différent de $m/d$ (en radians).

Et, pour un rapport signal sur bruit N des photons de la source, la précision de localisation I est telle que :

$$I=s/N^{1/2} \text{ (en radians).}$$

Dans ces formules, $\underline{m}$ est la taille des plus petits éléments opaques du masque 10 et $\underline{d}$ est la distance entre le masque 10 et le premier détecteur.

- Pour avoir un bon échantillonnage des pavés du masque avec le détecteur 6 ou les détecteurs 6 et 8, il est préférable que la taille des plus petits pavés du masque soit au moins égale à trois fois la taille des pixels de ces détecteurs 6 et 8.

On donne ci-après un exemple d'application numérique à titre purement indicatif et nullement limitatif :

- la taille des pixels des détecteurs plans vaut 0,5 mm
- $\underline{m}$ vaut au moins 1,5 mm ;
- $\underline{d}$ vaut 30 cm et l'on obtient s = 0,005 radian ;
- on peut donc distinguer deux sources qui sont séparées de 5 mm l'une de l'autre et se trouvent à 1 m du dispositif ;
- la précision de localisation I vaut 1 mm pour un rapport signal sur bruit égal à 25.
- en utilisant la reconstruction « Compton », on peut déterminer la distance d'une source, qui est située à 1 m du dispositif, avec une précision de 5 cm.

On donne ci-après un exemple de caméra gamma/X portable, conforme à l'invention.

On utilise deux détecteurs, l'un en Si et l'autre en CdTe, avec des pixels de 0,5 mm de coté. Il faut alors utiliser un masque dont les trous ont une taille minimale de 1,5 mm. Pour avoir une caméra portable, on peut envisager deux détecteurs de 10 cm x 10 cm de coté, et une distance de 30 cm entre le masque 10 et le premier détecteur 6.

Un tel dispositif permet une précision de localisation de 1 cm à une distance de 1 m en mode imagerie « Compton » (grand champ) et de 1 mm à une distance de 1 m en mode imagerie à masque codé.

En ajoutant des moyens permettant de limiter le bruit en dehors du champ de vue de la caméra, on obtient une caméra d'environ 10 à 15 kilogrammes qui est facilement transportable. Cette caméra est du genre de celle qui est schématiquement représentée sur la figure 1.

Dans l'exemple représenté sur cette figure, les moyens permettant de limiter le bruit en dehors du champ de vue de la caméra sont des parois 14 en plomb ou en tantale, qui entourent l'ensemble formé par les détecteurs 6 et 8 et le masque 10 et recouvrent aussi celle des faces du détecteur 8 qui n'est pas en regard du détecteur 6, comme on le voit.

- La réalisation des détecteurs ayant de multiples petits pixels impose l'utilisation de circuits électroniques de lecture très fortement intégrés (ASICS), ce qui tend à limiter la consommation électrique de manière radicale. Une seule voie indépendante de lecture d'un pixel peut consommer seulement de 1 mW à 3 mW. Pour le dispositif donné en exemple, cela correspond à un total de 40 W à 120 W.
- Une caméra dont les dimensions sont changées de manière homothétique par rapport à la caméra décrite ci-dessus a les mêmes propriétés optiques. Une plus grande surface des détecteurs permet d'obtenir une meilleure sensibilité.

Ce qui précède n'est donc qu'un exemple possible de caméra pour illustrer l'invention. D'autres dimensions sont envisageables, pour répondre aux différentes contraintes de précision de localisation, de sensibilité, de poids et/ou de consommation électrique.

On précise en outre que les détecteurs pixellisés peuvent comporter des pixels individuels ou des électrodes segmentées.

De plus, on précise que le dispositif permet de localiser précisément et simultanément, en trois dimensions, une (ou des) source(s) présentes dans le champ de vue du masque codé.

En outre, le dispositif permet de mesurer l'énergie de chaque photon incident. Pour ce faire, on procède de la façon suivante : chaque pixel du dispositif est associé à une chaîne électronique analogique, capable de produire un signal électrique dont la hauteur de l'impulsion est proportionnelle à l'énergie déposée par le photon dans le pixel.

Et ce dispositif permet de déterminer la date d'arrivée de chaque photon sur chaque détecteur. A chaque fois qu'un photon interagit dans l'un des détecteurs, son interaction est signalée à l'électronique de lecture par un signal numérique rapide. Ce signal est synchronisé sur une horloge qui permet d'en faire une datation précise (typiquement de l'ordre de 1 à 10 µs).

En outre, le dispositif permet de déterminer le flux de la (ou des) source(s) détectée(s).

Le dispositif permet aussi de déterminer la variation du flux de la (ou des) source(s) détectée(s).

Dans les exemples de l'invention que l'on a donnés, on a utilisé deux détecteurs de rayonnement. Cependant, plus de deux détecteurs peuvent être utilisés dans l'invention afin d'étendre la gamme d'énergies de cette dernière jusqu'à 10 MeV voire plus.

De plus, dans les exemples donnés, on a surtout considéré la localisation de sources de rayonnement gamma. Mais l'invention permet aussi la localisation de sources de rayonnement X et de sources de rayonnement X et gamma, en choisissant des détecteurs adaptés à de tels rayonnements.

**Revendications**

1.  Dispositif de localisation et d'imagerie de sources de rayonnement gamma ou X, comprenant :

    a) un ensemble de détection (2) comprenant :

    - au moins deux détecteurs de rayonnement gamma ou X, à savoir des premier (6) et deuxième (8) détecteurs sensibles à la position, chacun des premier et deuxième détecteurs étant apte à fournir une impulsion électrique lorsqu'il reçoit un photon du rayonnement (18), cette impulsion électrique étant représentative de l'énergie de ce photon et de la position d'impact de ce dernier sur le détecteur qui le reçoit, et
    - un masque codé (10) comportant un matériau qui est opaque au rayonnement et qui est percé de trous (12) selon un motif prédéfini, ce masque codé étant placé en regard du premier détecteur, ce dernier étant compris entre le masque codé et le deuxième détecteur, ce positionnement relatif permettant d'obtenir respectivement, à partir d'une source (16) que l'on veut localiser, des première et deuxième ombres portées sur les premier et deuxième détecteurs qui engendrent alors respectivement des première et deuxième images sous forme électrique de ces première et deuxième ombres portées, et

    b) des moyens électroniques (4) de traitement des impulsions électriques fournies par les premier et deuxième détecteurs, pour localiser la source et en former une image bi- ou tridimensionnelle, dans lequel les moyens électroniques de traitement (4) sont prévus pour :

    (α) sélectionner, parmi les impulsions électriques qui sont respectivement fournies par les premier et deuxième détecteurs, celles qui sont en coïncidence temporelle et sont dès lors susceptibles de représenter un événement de diffusion Compton d'un photon du rayonnement gamma ou X sur l'un des détecteurs suivie par absorption par l'autre détecteur ;

    le dispositif étant **caractérisé en ce que** lesdits moyens électroniques de traitement (4) sont également prévus pour :

(β) déterminer, par imagerie Compton, une estimation préliminaire de la position angulaire et de la distribution angulaire de la source (16) de rayonnement gamma ou X, en supposant qu'elle se trouve à une distance infinie de l'ensemble de détection (2) ;

(γ) sélectionner les impulsions électriques en coïncidence temporelle qui, d'après ladite estimation préliminaire de la position angulaire et de la distribution angulaire de la source (16) de rayonnement gamma ou X, sont susceptibles de représenter des photons provenant de ladite source (16) ;

(δ) effectuer la déconvolution de la première image ou de la deuxième image ou des première et deuxième images par rapport au motif du masque codé (10), sur les impulsions électriques sélectionnées, afin d'obtenir une première estimation de la position angulaire et de la distribution angulaire de la source (16) de rayonnement gamma ou X, constituant une image bidimensionnelle de ladite source ;

(ε) déterminer une première estimation de la distance de la source (16) par rapport à l'ensemble de détection (2) par analyse du grandissement de l'image du masque codé (10) sur l'un au moins des premier et deuxième détecteurs (6, 8) ; déterminer une incertitude de cette première estimation et en déduire une limite supérieure et une limite inférieure pour la distance de la source (16) ; et

(ζ) déterminer une seconde estimation de la position angulaire, de la distribution angulaire et de la distance de la source (16) par rapport à l'ensemble de détection (2) par imagerie Compton en trois dimensions, en exploitant la connaissance desdites limite supérieure et inférieure.

2. Dispositif selon la revendication 1, dans lequel les moyens électroniques de traitement (4) sont prévus pour déterminer ladite seconde estimation de la position angulaire, de la distribution angulaire et de la distance de la source (16) en :

(ζ1) déterminant une pluralité de valeurs d'essai de la distance de la source (16), comprises entre ladite limite inférieure et ladite limite supérieure ;

(ζ2) déterminant, par imagerie Compton, une estimation d'essai de la position angulaire et de la distribution angulaire de la source (16) en correspondance de chacune desdites valeurs d'essai de sa distance ;

(ζ3) déterminant une valeur d'incertitude pour chacune desdites estimations d'essai ; et

(ζ4) en choisissant, en tant que seconde estimation de la position angulaire et de la distribution angulaire de la source, l'estimation d'essai affectée par la plus faible incertitude, et en tant que seconde estimation de la distance de la source (16), la valeur d'essai de la distance correspondante.

3. Dispositif selon la revendication 1 ou 2, dans lequel les moyens électroniques de traitement (4) sont également prévus pour sélectionner, parmi la première et la seconde estimation de la position angulaire et de la distribution angulaire de la source, celle qui est affectée par la plus faible incertitude, et la combiner avec la seconde estimation de la distance de la source afin d'obtenir une image tridimensionnelle de ladite source.

4. Dispositif selon la revendication 3, dans lequel les moyens électroniques de traitement (4) sont également prévus pour mettre en oeuvre un procédé itératif de traitement des données dans lequel ladite image tridimensionnelle de la source (16) est utilisée en tant qu'estimation préliminaire de la position, de la distribution angulaire de ladite source et de la distance afin de sélectionner les impulsions électriques en coïncidence temporelle susceptibles de représenter des photons provenant de ladite source (16), ledit procédé comportant en outre une nouvelle exécution des étapes de traitement (δ), (ε) et (ζ) sur les impulsions ainsi sélectionnées.

5. Dispositif selon l'une quelconque des revendications précédentes, dans lequel les moyens électroniques de traitement (4) sont en outre prévus pour :

(η1) calculer, pour chaque couple d'impulsions électriques en coïncidence temporelle, l'angle de diffusion Compton vers l'avant et l'angle de diffusion Compton vers l'arrière en fonction de l'énergie déposée par le photon correspondant sur le premier (6) et sur le deuxième (8) détecteur, ainsi que de la position d'impact relative dudit photon sur lesdits premier et deuxième détecteurs (6, 8) ;

(η2) calculer, pour chaque couple d'impulsions électriques en coïncidence temporelle, la section efficace pour la diffusion Compton vers l'avant et la section efficace pour la diffusion Compton vers l'arrière en fonction de l'énergie déposée par le photon correspondant sur le premier (6) et sur le deuxième (8) détecteur, ainsi que de l'angle de diffusion Compton correspondant ; et

(η3) effectuer les étapes d'imagerie Compton en utilisant, pour chaque couple d'impulsions électriques en coïncidence temporelle, les angles de diffusion Compton vers l'avant et vers l'arrière déterminés à l'étape (η1), et en affectant à chacune de ces deux possibilités un coefficient de pondération d'autant plus grand que la valeur correspondante de la section efficace est grand.

6. Dispositif selon la revendication 5, dans lequel le coefficient de pondération est 1 pour la direction de diffusion présentant la section efficace de valeur plus élevée et 0 pour l'autre direction de diffusion.

7. Dispositif selon l'une quelconque des revendications précédentes, dans lequel les moyens électroniques de traitement (4) sont en outre prévus pour :

(θ1) calculer la proportion de coïncidences temporelles fortuites qui sont présentes dans les première et deuxième images ;
(θ2) générer des pseudo-événements fortuits en associant deux à deux les événements enregistrés par les deux détecteurs, et les soumettre au même traitement que les impulsions sélectionnées afin d'obtenir une pseudo-estimation de la position angulaire et de la distribution angulaire de la source (16) de rayonnement gamma ou X ; et
(θ3) pondérer ladite pseudo-estimation avec la proportion calculée de coïncidences temporelles fortuites et la soustraire à ladite image bidimensionnelle ou tridimensionnelle de la source (16) de rayonnement gamma ou X.

8. Dispositif selon l'une quelconque des revendications précédentes, dans lequel les premier et deuxième détecteurs (6, 8) sont des détecteurs plans.

9. Dispositif selon la revendication 8, dans lequel les premier et deuxième détecteurs (6, 8) sont sensiblement parallèles entre eux et audit masque (10).

10. Dispositif selon l'une quelconque des revendications précédentes, dans lequel les premier et deuxième détecteurs (6, 8) sont des détecteurs semi-conducteurs pixellisés.

11. Dispositif selon l'une quelconque des revendications précédentes, dans lequel les premier et deuxième détecteurs (6, 8) sont identiques.

12. Dispositif selon l'une quelconque des revendications précédentes, dans lequel les moyens électroniques de traitement (4) sont en outre prévus pour déterminer le spectre énergétique et le flux de la source (16) par analyse des impulsions électriques sélectionnées et des première et deuxième images, sur la dynamique spectrale totale du dispositif.

13. Dispositif selon l'une quelconque des revendications précédentes, dans lequel le masque codé (10) comporte un ensemble de pavés, chacun des premier et deuxième détecteurs (6, 8) comporte un ensemble de pixels et la taille des plus petits pavés du masque est au moins égale à trois fois la taille des pixels des premiers et deuxième détecteurs.

**Patentansprüche**

1. Lokalisierungs- und Bildgebungsvorrichtung von Gamma- oder Röntgenstrahlquellen, die enthält:

a) eine Erfassungseinheit (2), die enthält:

- mindestens zwei Gamma- oder Röntgenstrahldetektoren, nämlich einen ersten (6) und einen zweiten (8) positionsempfindlichen Detektor, wobei jeder der ersten und zweiten Detektoren einen elektrischen Impuls liefern kann, wenn er ein Photon von der Strahlung (18) empfängt, wobei dieser elektrische Impuls für die Energie dieses Photons und die Aufprallposition dieses letzteren auf den es empfangenden Detektor repräsentativ ist, und
- eine codierte Maske (10), die ein Material aufweist, das für die Strahlung undurchlässig und gemäß einem vordefinierten Muster mit Löchern (12) durchbohrt ist, wobei diese codierte Maske gegenüber dem ersten Detektor angeordnet ist, wobei letzterer zwischen der codierten Maske und dem zweiten Detektor enthalten ist, wobei diese relative Positionierung es ermöglicht, jeweils ausgehend von einer Quelle (16), die lokalisiert werden soll, einen ersten und einen zweiten auf den ersten und zweiten Detektoren getragenen Schatten zu erhalten, die dann jeweils erste und zweite Bilder dieser ersten und zweiten getragenen Schatten in elektrischer Form erzeugen, und

b) elektronische Einrichtungen (4) zur Verarbeitung der von den ersten und zweiten Detektoren gelieferten elektrischen Impulse, um die Quelle zu lokalisieren und daraus ein zwei- oder dreidimensionales Bild zu formen, wobei die elektronischen Verarbeitungseinrichtungen (4) vorgesehen sind, um:

(α) unter den elektrischen Impulsen, die vom ersten bzw. zweiten Detektor geliefert werden, diejenigen auszuwählen, die zeitlich koinzidieren und daher ein Ereignis einer Compton-Streuung eines Photons der Gamma- oder Röntgenstrahlung auf einem der Detektoren darstellen können, gefolgt von der Absorption durch den anderen Detektor;

wobei die Vorrichtung **dadurch gekennzeichnet ist, dass** die elektronischen Verarbeitungseinrichtungen (4) ebenfalls vorgesehen sind, um:

(β) durch Compton-Bildgebung eine vorläufige Schätzung der Winkelposition und der Winkelverteilung der Gamma- oder Röntgenstrahlungsquelle (16) zu bestimmen, indem angenommen wird, dass sie sich in einem unendlichen Abstand von der Erfassungseinheit (2) befindet;
(γ) die zeitlich koinzidierenden elektrischen Impulse auszuwählen, die gemäß der vorläufigen Schätzung der Winkelposition und der Winkelverteilung der Gamma- oder Röntgenstrahlungsquelle (16) von der Quelle (16) stammende Photonen darstellen können;
(δ) die Entfaltung des ersten Bilds oder des zweiten Bilds oder der ersten und zweiten Bilder bezüglich des Musters der codierten Maske (10) auf den ausgewählten elektrischen Impulsen durchzuführen, um eine erste Schätzung der Winkelposition und der Winkelverteilung der Gamma- oder Röntgenstrahlungsquelle (16) zu erhalten, die ein zweidimensionales Bild der Quelle bildet;
(ε) eine erste Schätzung des Abstands der Quelle (16) bezüglich der Erfassungseinheit (2) durch Analyse der Vergrößerung des Bilds der codierten Maske (10) auf mindestens einem der ersten und zweiten Detektoren (6, 8) zu bestimmen; eine Unsicherheit dieser ersten Schätzung zu bestimmen und daraus eine Obergrenze und eine Untergrenze für den Abstand der Quelle (16) abzuleiten; und
(ζ) eine zweite Schätzung der Winkelposition, der Winkelverteilung und des Abstands der Quelle (16) bezüglich der Erfassungseinheit (2) durch dreidimensionale Compton-Bildgebung zu bestimmen, indem die Kenntnis der Ober- und Untergrenze ausgewertet wird.

2. Vorrichtung nach Anspruch 1, wobei die elektronischen Verarbeitungseinrichtungen (4) vorgesehen sind, um die zweite Schätzung der Winkelposition, der Winkelverteilung und des Abstands der Quelle (16) zu bestimmen, indem:

(ζ1) eine Vielzahl von Testwerten des Abstands der Quelle (16) bestimmt wird, die zwischen der Untergrenze und der Obergrenze liegen;
(ζ2) durch Compton-Bildgebung eine Testschätzung der Winkelposition und der Winkelverteilung der Quelle (16) entsprechend jedem der Testwerte ihres Abstands bestimmt wird;
(ζ3) ein Unsicherheitswert für jede der Testschätzungen bestimmt wird; und
(ζ4) als zweite Schätzung der Winkelposition und der Winkelverteilung der Quelle die Testschätzung, die mit der geringsten Unsicherheit behaftet ist, und als zweite Schätzung des Abstands der Quelle (16) der entsprechende Testwert des Abstands gewählt wird.

3. Vorrichtung nach Anspruch 1 oder 2, wobei die elektronischen Verarbeitungseinrichtungen (4) ebenfalls vorgesehen sind, um unter der ersten und der zweiten Schätzung der Winkelposition und der Winkelverteilung der Quelle diejenige auszuwählen, die mit der geringsten Unsicherheit behaftet ist, und sie mit der zweiten Schätzung des Abstands der Quelle zu kombinieren, um ein dreidimensionales Bild der Quelle zu erhalten.

4. Vorrichtung nach Anspruch 3, wobei die elektronischen Verarbeitungseinrichtungen (4) ebenfalls vorgesehen sind, um ein iteratives Datenverarbeitungsverfahren durchzuführen, wobei das dreidimensionale Bild der Quelle (16) als vorläufige Schätzung der Position, der Winkelverteilung der Quelle und des Abstands verwendet wird, um die zeitlich koinzidierenden elektrischen Impulse auszuwählen, die von der Quelle (16) stammende Photonen darstellen können, wobei das Verfahren außerdem eine erneute Ausführung der Verarbeitungsschritte (δ), (ε) und (ζ) an den so ausgewählten Impulsen aufweist.

5. Vorrichtung nach einem der vorhergehenden Ansprüche, wobei die elektronischen Verarbeitungseinrichtungen (4) außerdem vorgesehen sind, um:

(η1) für jedes Paar von zeitlich koinzidierenden elektrischen Impulsen den Winkel der Compton-Streuung nach vorne und den Winkel der Compton-Streuung nach hinten abhängig von der vom entsprechenden Photon auf dem ersten (6) und dem zweiten (8) Detektor deponierten Energie sowie von der relativen Aufprallposition des Photons auf den ersten und den zweiten Detektor (6, 8) zu berechnen;

(η2) für jedes Paar von zeitlich koinzidierenden elektrischen Impulsen den Wirkungsquerschnitt für die Compton-Streuung nach vorne und den Wirkungsquerschnitt für die Compton-Streuung nach hinten abhängig von der vom entsprechenden Photon auf dem ersten (6) und auf dem zweiten (8) Detektor deponierten Energie sowie vom entsprechenden Winkel der Compton-Streuung zu berechnen; und

(η3) die Schritte der Compton-Bildgebung durchzuführen, indem für jedes Paar von zeitlich koinzidierenden elektrischen Impulsen die im Schritt (η1) bestimmten Winkel der Compton-Streuung nach vorne und nach hinten verwendet werden, und indem jeder dieser zwei Möglichkeiten ein Gewichtungskoeffizient zugewiesen wird, der umso größer ist, je größer der entsprechende Wert des Wirkungsquerschnitts ist.

6. Vorrichtung nach Anspruch 5, wobei der Gewichtungskoeffizient für die den Wirkungsquerschnitt höheren Werts aufweisende Streuungsrichtung 1 und für die andere Streuungsrichtung 0 ist.

7. Vorrichtung nach einem der vorhergehenden Ansprüche, wobei die elektronischen Verarbeitungseinrichtungen (4) außerdem vorgesehen sind, um:

(ϑ1) den Anteil von zufälligen zeitlichen Koinzidenzen zu berechnen, die im ersten und im zweiten Bild vorhanden sind;

(ϑ2) zufällige Pseudo-Ereignisse zu erzeugen, indem die von den zwei Detektoren erfassten Ereignisse paarweise zusammengefasst werden, und sie der gleichen Verarbeitung wie die ausgewählten Impulse zu unterziehen, um eine Pseudo-Schätzung der Winkelposition und der Winkelverteilung der Gamma- oder Röntgenstrahlungsquelle (16) zu erhalten; und

(ϑ3) die Pseudo-Schätzung mit dem berechneten Anteil von zufälligen zeitlichen Koinzidenzen zu gewichten und sie vom zweidimensionalen oder dreidimensionalen Bild der Gamma- oder Röntgenstrahlungsquelle (16) zu subtrahieren.

8. Vorrichtung nach einem der vorhergehenden Ansprüche, wobei der erste und der zweite Detektor (6, 8) Flachdetektoren sind.

9. Vorrichtung nach Anspruch 8, wobei der erste und der zweite Detektor (6, 8) im Wesentlichen parallel zueinander und zur Maske (10) sind.

10. Vorrichtung nach einem der vorhergehenden Ansprüche, wobei der erste und der zweite Detektor (6, 8) gepixelte Halbleiterdetektoren sind.

11. Vorrichtung nach einem der vorhergehenden Ansprüche, wobei der erste und der zweite Detektor (6, 8) gleich sind.

12. Vorrichtung nach einem der vorhergehenden Ansprüche, wobei die elektronischen Verarbeitungseinrichtungen (4) außerdem vorgesehen sind, um das Energiespektrum und den Strom der Quelle (16) durch Analyse der ausgewählten elektrischen Impulse und der ersten und zweiten Bilder über die Gesamtspektraldynamik der Vorrichtung zu bestimmen.

13. Vorrichtung nach einem der vorhergehenden Ansprüche, wobei die codierte Maske (10) eine Einheit von Blöcken aufweist, wobei jeder ersten und zweiten Detektoren (6, 8) eine Einheit von Pixeln aufweist, und die Größe der kleinsten Blöcke der Maske mindestens gleich dem Dreifachen der Größe der Pixel der ersten und zweiten Detektoren ist.

**Claims**

1. A device for localizing and imaging sources of gamma or X-rays, the device comprising:

a) a detector assembly (2) comprising:

· at least two gamma or X-ray detectors, namely first (6) and second (8) detectors sensitive to position, each of the first and second detectors being suitable for providing an electric pulse on receiving a photon of radiation (18), said electric pulse being representative of the energy of said photon and of the position of its impact on the detector that receives it; and

· a coded mask (10) made of a material that is opaque to the radiation and that is pierced by apertures (12) in a predefined pattern, the coded mask being placed in front of the first detector, which first detector lies between the coded mask and the second detector, this relative positioning enabling to obtain from a source (16) that is to be localized, first and second shadows being cast on the first and second detectors that then generate respective first and second images in electrical form of said first and second cast shadows; and

b) electronic means (4) for processing the electric pulses delivered by the first and second detectors in order to localize the source and form a two- or three-dimensional image;

wherein the electronic processor means (4) are designed:

($\alpha$) to select from amongst the electric pulses that are delivered respectively by the first and second detectors, those pulses that are in time coincidence and that are therefore capable of representing a Compton diffusion event of a gamma or X-ray photon on one of the detectors followed by absorption on the other detector; the device being **characterized in that** the electronic processor means (4) are also designed:

($\beta$) to use Compton imaging to determine a preliminary estimates of the angular position and of the angular distribution of the source (16) of gamma or X-rays radiation, assuming that the source is at an infinite distance from the detector assembly (2);

($\gamma$) to select electric pulses in time coincidence that, from said preliminary estimates of the angular position and the angular distribution of the source (16) of gamma or X-rays radiation, are capable of representing photons coming from said source (16); and

($\delta$) to deconvolute the first image or the second image or the first and second images relative to the pattern of the coded mask (10) on the selected electric pulses so as to obtain first estimates of the angular position and the angular distribution of the source (16) of gamma or X-rays radiation, thereby constituting a two-dimensional image of said source.

($\varepsilon$) to determine a first estimate of the distance of the source (16) from the detector assembly (2) by analyzing the enlargement of the image of the coded mask (10) on at least one of the first and second detectors, (6, 8) to determine uncertainty for said first estimate, and to deduce therefrom an upper limit and a lower limit for the distance to the source (16); and

($\zeta$) to determine a second estimates of the angular position, of the angular distribution, and of the distance of the source (16) from the detector assembly (2) by three-dimensional Compton imaging, making use of the knowledge of said upper and lower limits.

2. A device according to claim 1, in which the electronic processor means (4) are designed to determine said second estimates of the angular position, the angular distribution, and the distance of the source (16) by:

($\zeta$1) determining a plurality of test values for the distance to the source (16), the test values lying between said lower limit and said upper limit;

($\zeta$2) using Compton imaging to determine test estimates of the angular position and of the angular distribution of the source (16) in correspondence with each of said test values for its distance;

($\zeta$3) determining an uncertainty value for each of said test estimate; and

($\zeta$4) selecting as second estimates of the angular position and of the angular distribution of the source, the test estimate associated with the smallest uncertainty, and as the second estimate for the distance to the source (16), the corresponding distance test value.

3. A device according to claim 1 or claim 2, in which the electronic processor means (4) are also designed to select from the first and second estimates of the angular position and of the angular distribution of the source, those estimates that are associated with the smallest uncertainty, and combine them with the second estimates of the distance of the source in order to obtain a three-dimensional image of said source.

4. A device according to claim 3, in which the electronic processor means (4) are also designed to implement an iterative method of processing data in which said three-dimensional image of the source (16) is used to provide preliminary estimates of the position, the angular distribution of said source and of its distance, in order to select electric pulses in time coincidence that are capable of representing photons coming from said source (16), said method further including additional execution of the processing steps ($\delta$), ($\varepsilon$), and ($\zeta$) on the pulses as selected in this way.

5. A device according to any of the preceding claims, in which the electronic processor means (4) are further designed:

   ($\eta$1) to calculate, for each pair of electric pulses in time coincidence, the forward Compton diffusion angle and the backward Compton diffusion angle as a function of the energy given up by the corresponding photon on the first detector (6) and on the second detector (8), and also the relative impact position of said photon on said first and second detectors (6, 8):

   ($\eta$2) to calculate, for each pair of electric pulses in time coincidence, the cross-section for forward Compton diffusion and the cross-section for backward Compton diffusion as a function of the energy given up by the corresponding photon on the first (6) and second (8) detectors, and also the corresponding Compton diffusion angle; and
   ($\eta$3) to perform the Compton imaging step by making use for each pair of electric pulses in time coincidence, of the forward and backward Compton diffusion angles as determined in step ($\eta$1), and to give each of these two possibilities a weighting coefficient that increases for increasing value of the corresponding cross-section.

6. A device according to claim 5, in which the weighting coefficient is 1 for the diffusion direction presenting the greater cross-section and 0 for the other diffusion direction.

7. A device according to any of the preceding claims, in which the electronic processor means (4) are also designed:

   ($\vartheta$1) to calculate the proportion of fortuitous time coincidences that are present in the first and second images:
   ($\vartheta$2) to generate fortuitous pseudo-events by associating the events recorded by the two detectors in pairs and by subjecting them to the same processing as the selected pulses in order to obtain pseudo-estimates for the angular position and the angular distribution of the source (16) of gamma or X-rays radiation; and
   ($\vartheta$3) to weight said pseudo-estimate with the calculated proportion of fortuitous time coincidences and to subtract it from two-dimensional or three-dimensional image of the source (16) of gamma or X-rays radiation.

8. A device according to any of the preceding claims, in which the first and second detectors (6, 8) are plane detectors.

9. A device according to claim 8, in which the first and second detectors (6, 8) are substantially parallel to each other and to said mask (10).

10. A device according to any of the preceding claims, in which the first and second detectors (6, 8) are pixelized semiconductor detectors.

11. A device according to any of the preceding claims, in which the first and second detectors (6, 8) are identical.

12. A device according to any of the preceding claims, in which the electronic processor means (4) are also designed to determine the energy spectrum and the flux of the source (16) by analyzing the selected electric pulses and the first and second images, over the entire spectrum range of the device.

13. A device according to any of the preceding claims, in which the coded mask (10) comprises a set of tiles, each of the first and second detectors (6, 8) comprising a set of pixels, with the size of the smallest tiles in the mask being at least three times the size of the pixels in the first and second detectors.

FIG.1

FIG.2

FIG.3

FIG.4

α  sélection des impulsions
en coïncidence temporelle

β  estimation préliminaire
position/distribution angulaire
par imagerie Compton

γ  sélection des photons

δ/ε  1$^e$ estimation position/
distribution angulaire et
distance par imagerie à
masque codé

1$^e$ estimation 2D

sélection

ζ  2$^e$ estimation positon/
distribution angulaire et
distance par imagerie
Compton assistée par la
1$^e$ estimation

2$^e$ estimation 2D

2$^e$ estimation distance

meilleure
estimation 2D

Estimation 3D de sortie

itération

FIG.5

## RÉFÉRENCES CITÉES DANS LA DESCRIPTION

**Documents brevets cités dans la description**

- GB 2293742 A

**Littérature non-brevet citée dans la description**

- **OLIVIER LIMOUSIN.** Mise en oeuvre et étude des propriétés spectrales de la gamma-caméra ISGRI. *thèse,* 27 Novembre 2001
- **O. LIMOUSIN et al.** The basic component of the ISGRI CdTe gamma-ray camera for space telescope IBIS on board the INTEGRAL satellite. *Nuclear Instruments and Methods in Physics Research A,* 1999, vol. 428, 216-222
- **O. LIMOUSIN et al.** Polycell: the elementary detection unit of the ISGRI CdTe & gamma-ray camera. *Nuclear Instruments and Methods in Physics Research A,* 2001, vol. 458 (1-2), 551-557
- **M. ARQUES et al.** A basic component for ISGRI, the CdTe gamma camera on board the Integral satellite. *IEEE Transactions on nuclear science,* 1999, vol. 46 (3), 181-186
- **O. LIMOUSIN et al.** The ISGRI CdTe gamma-ray camera: first steps. *Nuclear Instruments and Methods in Physics Research A,* 2000, vol. 442, 244-249
- **O. LIMOUSIN et al.** Qualification model of the space ISGRI CdTe gamma-ray camera. *Nuclear Instruments and Methods in Physics Research A,* 2000, vol. 471, 174-178
- **MARCINKOWSKI R. et al.** Gamma-ray burst détection and localization capabilities of the IBIS/INTE-GRAL telescope Compton mode. *Il Nuovo Cimento,* 2005, vol. 28, 845
- **A. GROS et al.** the INTEGRAL IBIS/ISGRI. System point spread function and source location accuracy. *Astronomy and Astrophysics,* 2003, vol. 411, L179
- **A. GOLDWURM et al.** INTEGRAL/IBIS scientific data analysis. *Astronomy and Astrophysics,* 2003, vol. 411, L223
- **B.P.F. DIRKS et al.** 3D modeling of Cd(Zn)Te detectors for the SIMBOL-X space mission. *High Energy Detectors in Astronomy, Proceedings of SPIE,* Juin 2004, vol. 5501
- **B.P.F. DIRKS et al.** Leakage current measurements on pixelated CdZnTe detectors. *Nuclear Instruments and Methods in Physics Research A,* 2006